# EUROPEAN PATENT SPECIFICATION

(11) **EP 3 633 287 B1**
(45) Date of publication and mention of the grant of the patent: **08.09.2021**
(21) Application number: 18824553.4
(22) Date of filing: 23.04.2018
(51) Int. Cl.: F24H 9/20, F24H 3/04, G05D 23/19

(54) **WARM AIR BLOWER CONTROL METHOD AND DEVICE, WARM AIR BLOWER AND STORAGE MEDIUM**
VERFAHREN UND VORRICHTUNG ZUR WARMLUFTGEBLÄSEREGELUNG, WARMLUFTGEBLÄSE UND SPEICHERMEDIUM
PROCÉDÉ ET DISPOSITIF DE COMMANDE DE SOUFFLERIE D'AIR CHAUD, SOUFFLERIE D'AIR CHAUD ET SUPPORT DE STOCKAGE

(30) Priority: 29.06.2017 CN 201710531620
(43) Date of publication of application: 08.04.2020
(73) Proprietor: GD Midea Environment Appliances MFG Co., Ltd., Zhongshan, Guangdong 528425 (CN); Midea Group Co., Ltd., Guangdong 528311 (CN)
(72) Inventor: WANG, Qing, Zhongshan Guangdong 528425 (CN); LUO, Jin, Zhongshan Guangdong 528425 (CN); WU, Rulin, Zhongshan Guangdong 528425 (CN); TAN, Chengbo, Zhongshan Guangdong 528425 (CN)
(74) Representative: RGTH
(86) International application number: PCT/CN2018/084092
(87) International publication number: WO 2019/001117

(56) References cited:
- CN-A- 102 853 479
- CN-A- 102 853 479
- CN-A- 103 712 336
- CN-A- 105 423 507
- CN-A- 107 289 634
- JP-A- H0 849 866
- JP-B2- 3 555 127
- US-A- 4 684 060
- US-A1- 2010 187 318
- US-B1- 9 500 386

## Description

### TECHNICAL FIELD

The present disclosure relates to the technical field of fan heater, and in particular, to a method and a device for controlling a fan heater, a fan heater, and a storage medium.

### BACKGROUND

A fan heater, a kind of heating device, normally includes a housing, a fan, a heater, a controller, etc. Its working principle is that the flow wind generated by the fan forces and brings the heat generated by the heater out, which produces a heating effect.

However, the current fan heater is used to adjust the indoor temperature through only controlling the power of the heater. The adjusting mode has the problems of slow temperature rise rate, poor control precision, and frequent heating manipulations.

CN 105 423 507 A discloses a heating control method for an air conditioner according to the preamble of claim 1. When the air conditioner enters the heating mode, the current ambient temperature is monitored in real time and is compared with a set temperature. A difference between the current ambient temperature and a set temperature is calculated and an operating state of the electric heating device is controlled according to the comparison result. The working state of the electric heating device includes: stopping the operation, increasing the operating power, and reducing the operating power. Further state of the art is known from US 2010/167318 A1, CN 102 853 479 A, US 9 500 386 B1 and US 4 684 060 A.

### SUMMARY

The main objective of the present disclosure is to provide a method for controlling a fan heater, which aims to speed up the temperature rise rate, improve the control precision, and reduce the manipulation frequency.

In order to achieve the above objective, the present disclosure provides a method for controlling a fan heater, the method includes the following operations:
sampling an indoor temperature at a preset interval;
comparing the sampled indoor temperature with a preset temperature to obtain a temperature control signal; and
adjusting a power of a heater and a rotate speed of a fan according to the temperature control signal,
wherein
the operation of "adjusting a power of a heater and a rotate speed of a fan according to the temperature control signal" includes:
   controlling the fan to rotate at a low speed and controlling the heater to heat at a high power, in response to a determination that the difference value is between a first preset difference and a second preset difference..

Optionally, the operation of "comparing the sampled indoor temperature with a preset temperature to obtain a temperature control signal" includes:
obtaining a difference value by subtracting the sampled indoor temperature from the preset temperature value; and
converting the difference value into the temperature control signal.

Optionally, the operation of "adjusting a power of a heater and a rotate speed of a fan according to the temperature control signal" includes:
controlling the fan to rotate at a high speed and controlling the heater to heat at a high power, in response to a determination that the difference value is greater than a first preset difference.

Optionally, the first preset difference is 5 degrees Celsius, the high speed is in a range of 1800 rpm to 2300 rpm, and the high power is in a range of 1800 watts to 2200 watts.
controlling the fan to rotate a

Optionally, the first preset difference is 5 degrees Celsius, the second preset difference is 3 degrees Celsius, the low speed is in a range of 900 rpm to 1600 rpm, and the high power is in a range of 1800 watts to 2200 watts.

Optionally, the operation of "adjusting a power of a heater and a rotate speed of a fan according to the temperature control signal" includes:
controlling the fan to rotate at a low speed and controlling the heater to heat at a low power, in response to a determination that the difference value is less than a second preset difference and greater than zero.

Optionally, the second preset difference is 3 degrees Celsius, the low speed is in a range of 900 rpm to 1600 rpm, and the low power is in a range of 900 to 1600 watts.

Optionally, the operation of "adjusting a power of a heater and a rotate speed of a fan according to the temperature control signal" includes:
controlling the fan to stop operating after the sampled indoor temperature reaches the preset temperature value, and controlling the heater to stop operating after a preset time duration.

The present disclosure provides a device for controlling a fan heater, the device includes a memory, a processor, and a program for controlling the fan heater stored on the memory and executable on the processor, the program, when executed by the processor, implements the operations of the method as described above.

The present disclosure provides a fan heater including a housing, a heater, a fan assembly, and a device for controlling the fan heater as described above. The heater, the fan assembly and the device for controlling the fan heater are all disposed in the housing.

The present disclosure further provides a storage medium, the storage medium stores a program for controlling a fan heater, the program, when executed by a processor, implements the operations of the method for controlling the fan heater as described above.

In the technical solutions of the present disclosure, a temperature control signal is obtained by comparing an indoor temperature with a preset temperature. The rotate speed of the fan and the power of the heater are simultaneously adjusted according to the temperature control signal, for accelerating the temperature rise rate and realizing the constant temperature control more accurately, thereby reducing the heating manipulation frequency and improving the control performance.

### BRIEF DESCRIPTION OF THE DRAWINGS

In order to more clearly illustrate the embodiments of the present disclosure or the technical solutions in the related art, the drawings used in the embodiments or the related art will be briefly described below. Obviously, the drawings in the following description are only some embodiments of the present disclosure. It will be apparent to those skilled in the art that other figures can be obtained from the structures illustrated in the drawings without the inventive effort.
FIG. 1 is a flow chart of a method for controlling a fan heater according to an embodiment of the present disclosure;
FIG. 2 is a cross-sectional view of the fan heater according to an embodiment of the present disclosure; and
FIG. 3 is an electric control structural view of the fan heater according to an embodiment of the present disclosure.

Description of reference numerals:

| Label | Name | Label | Name |
|---|---|---|---|
| K1 | Power switch | XP | Plug |
| K2 | Dump switch | 10 | Control board |
| K3 | Temperature limiter | 20 | Driving board |
| PTC | Heater | 30 | Housing |
| GM | Shaded pole motor | 40 | Fan |
| GS | Synchronous motor | 50 | Heater |
| RT | Thermistor | 60 | Device for controlling a fan heater |

The realization of the objective, functional characteristics, advantages of the present disclosure are further described with reference to the accompanying drawings.

### DETAILED DESCRIPTION OF THE EMBODIMENTS

The technical solutions of the embodiments of the present disclosure will be clearly and completely described in the following with reference to the accompanying drawings. It is obvious that the embodiments to be described are only a part rather than all of the embodiments of the present disclosure. All other embodiments obtained by persons skilled in the art based on the embodiments of the present disclosure without creative efforts shall fall within the protection scope of the present disclosure.

It is to be understood that, all of the directional instructions in the embodiments of the present disclosure (such as top, bottom, left, right, front, rear...) can only be used for explaining relative position relations, moving condition of the elements under a special form (referring to figures), and so on, if the special form changes, the directional instructions changes accordingly.

In addition, the descriptions, such as the "first", the "second" in the embodiment of present disclosure, can only be used for describing the aim of description, and cannot be understood as indicating or suggesting relative importance or impliedly indicating the number of the indicated technical character. Therefore, the character indicated by the "first", the "second" can express or impliedly include at least one character. Besides, the technical solution of each embodiment can be combined with each other, however the technical solution must base on that the ordinary skill in that art can realize the technical solution, when the combination of the technical solutions is contradictory or cannot be realized, it should consider that the combination of the technical solutions does not exist, and is beyond the protection scope of the present disclosure.

The present disclosure provides a method for controlling a fan heater. It is easy to understand that the method is used for controlling heating of the fan heater.

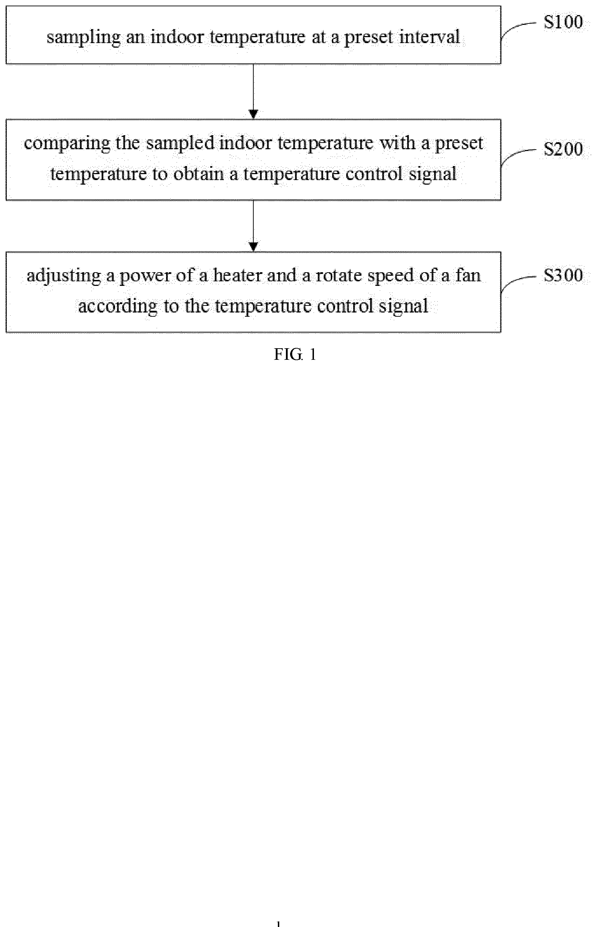

In an embodiment of the present disclosure, as shown in FIG. 1, the method for controlling the fan heater, including:
S100, sampling an indoor temperature at a preset interval;
S200, comparing the sampled indoor temperature with a preset temperature to obtain a temperature control signal; and
S300, adjusting a power of a heater and a rotate speed of a fan according to the temperature control signal.

It should be noted that a fan and a heater are installed in the fan heater. In this embodiment, the heater uses a positive temperature coefficient heating sheet. The temperature is sampled by a thermistor that is placed at the air inlet of the fan heater. The heater is configured to heat the air, and the fan is configured to accelerate the convection of the hot air generated by the heater, so that the distribution of indoor temperature is uniform and the temperature rise is accelerated.

In operation S200, the level of the indoor temperature is determined by comparing the temperature value with the preset temperature value. In the present embodiment, the heater has two power positions, and the fan also has two speed positions. It is easy to understand that in order to further improve the control accuracy, the number of working positions of the heater and the number of working positions of the fan can be increased.

When the indoor temperature is low, the heater is controlled to operate at a high power position, and the fan is controlled to operate at a high speed position. With the gradual increase of the indoor temperature, the working positions of the heater and the fan can be adjusted. Through the cooperation of the heater and the fan, rapid heating and constant temperature control can be achieved.

In the technical solution of the present disclosure, an indoor temperature value is compared with a preset temperature to obtain a temperature control signal, and a power of a heater and a rotate speed of a fan are adjusted according to the temperature control signal. As such, the temperature rise rate is accelerated, and more precise temperature control is achieved, thereby reducing the heating manipulation frequency and improving control performance.

Specially, the operation of "comparing the sampled indoor temperature with a preset temperature to obtain a temperature control signal" includes:
obtaining a difference value by subtracting the sampled indoor temperature from the preset temperature value; and converting the difference value into the temperature control signal.

In the present embodiment, it is a subtracting method to determine the level of the indoor temperature. In addition, other comparison methods may be used for determining the level of the indoor temperature, for example, dividing the sampled indoor temperature by the preset temperature value and determining the level of the indoor temperature by the quotient obtained after the division.

Specially, the operation of "adjusting a power of a heater and a rotate speed of a fan according to the temperature control signal" includes:
controlling the fan to rotate at a high speed and controlling the heater to heat at a high power, in response to a determination that the difference value is greater than a first preset difference.

In the present embodiment, the first preset difference is 5 degrees Celsius, the high speed is in a range of 1800 rpm to 2300 rpm, and the high power is in a range of 1800 watts to 2200 watts. It should be noted that when the difference value is greater than 5 degrees Celsius, it indicates that the indoor temperature is low and heating is urgently needed. At this time, the fan of the fan heater works at the high power position, and the heater also works at the high power position.

Specially, the operation of "adjusting a power of a heater and a rotate speed of a fan according to the temperature control signal" includes:
controlling the fan to rotate at a low speed and controlling the heater to heat at a high power, in response to a determination that the difference value is between a first preset difference and a second preset difference.

In the present embodiment, the first preset difference is 5 degrees Celsius, the second preset difference is 3 degrees Celsius, the low speed is in a range of 900 rpm to 1600 rpm, and the high power is in a range of 1800 watts to 2200 watts. When the difference value is between 3 degrees Celsius and 5 degrees Celsius, it indicates that the indoor temperature is raised and the environmental comfort is improved. At this time, the rotate speed of the fan should be appropriately reduced such that the fan is operated at a low speed, which reduces fan noise and reduces undesirable interference to people.

Specially, the operation of "adjusting a power of a heater and a rotate speed of a fan according to the temperature control signal" includes:
controlling the fan to rotate at a low speed and controlling the heater to heat at a low power, in response to a determination that the difference value is less than a second preset difference and greater than zero.

In the present embodiment, the second preset difference is 3 degrees Celsius, the low speed is in a range of 900 rpm to 1600 rpm, and the low power is in a range of 900 to 1600 watts. When the difference value is within 3 degrees Celsius, it indicates that the indoor temperature is close to the preset temperature value, no need for rapid heating, and the temperature needs to be fine-tuned. At this time, the heating power of the heater is reduced, such that the heater is operated at a low power, and the fan is operated at a low speed, thereby reducing the energy consumption, and improving the constant temperature control capability.

Specially, the operation of "adjusting a power of a heater and a rotate speed of a fan according to the temperature control signal" includes:
controlling the fan to stop operating after the sampled indoor temperature reaches the preset temperature value, and controlling the heater to stop operating after a preset time duration.

It should be noted that when the fan rotates, vibration noise will be generated. After the sampled indoor temperature reaches the preset temperature value, the fan power supply is turned off to stop the fan to reduce noise.

The present disclosure provides a device for controlling a fan heater, the device includes a memory, a processor, and a program for controlling the fan heater stored on the memory and executable on the processor, the program, when executed by the processor, implements the operations of the method as described above.

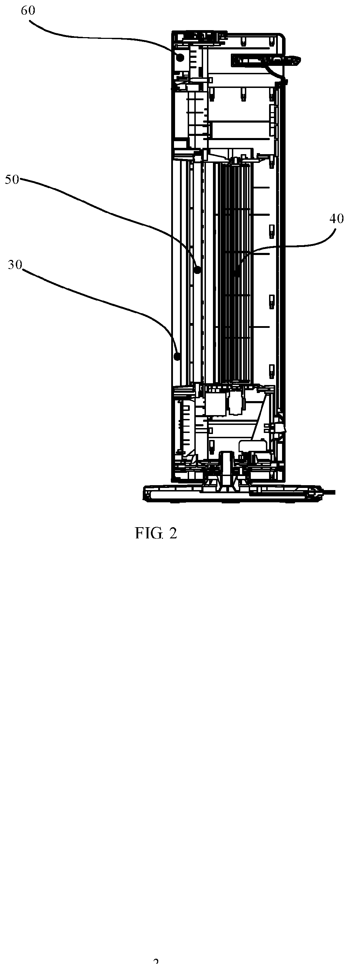

Referring to FIG. 2, the present disclosure provides a fan heater. The fan heater includes a housing 30, a heater 50, a fan assembly 40, and a device for controlling the fan heater as described above. The heater 50, the fan assembly 40 and the device for controlling the fan heater are all disposed in the housing 30. The specific structural function of the fan heater control device refers to the above embodiments. Since all the technical solutions of all the above embodiments are adopted in the present fan heater, at least all the beneficial effects brought by the technical solutions of the foregoing embodiments are not described herein.

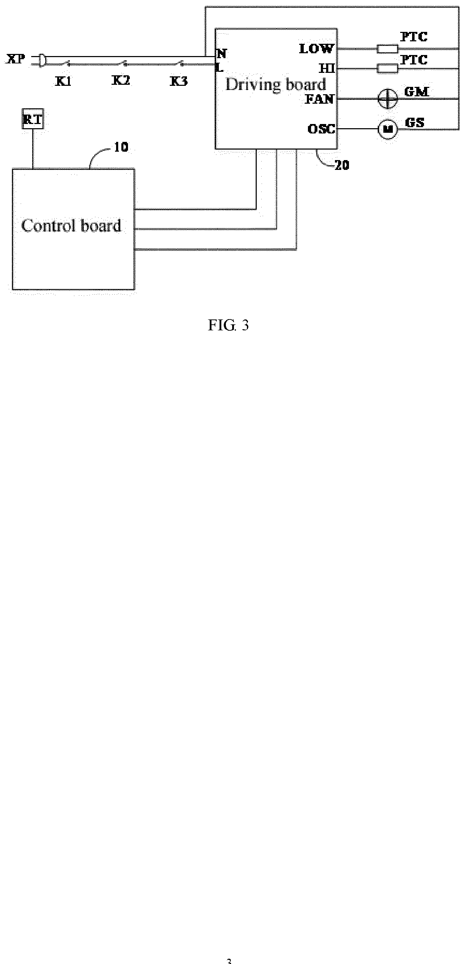

In the present embodiment, referring to FIG. 3, the fan heater includes a control board 10 and a driving board 20 connected to the control board 10. The control board 10 is connected to the temperature sensing head, and the temperature sensing head is used for sampling temperature. The control board 10 is provided with a memory and a processor in which a computer program is stored, the computer program, when executed by the processor, implements the operations of the method for controlling the fan heater as described above.

The driving board 20 is also connected with a plug XP, a power switch K1, a dump switch K2, and a temperature limiter K3. One end of the power switch K1 is connected to the plug XP, and the other end of the power switch K1 is connected to one end of the dump switch K2. The other end of the dump switch K2 is connected to the driving board 20 via the temperature limiter K3.

One end of the heater PTC (i.e., the heater 50 in FIG. 2) of the fan heater is connected to the driving board 20, and the other end is connected to the plug XP. One end of the synchronous motor GS of the fan heater is connected to the driving board 20, and the other end of the synchronous motor GS is connected to the plug XP. One end of the shaded pole motor GM of the fan heater is connected to the driving board 20, and the other end of the shaded pole motor GM is connected to the plug XP. The synchronous motor GS is configured to control the swing of the air outlet of the fan heater, and the shaded pole motor GM is configured to control the rotation of the fan.

The present disclosure further provides a storage medium, the storage medium stores a program for controlling a fan heater, the program, when executed by a processor, implements the operations of the method for controlling the fan heater as described above.

Through the description of the above embodiments, it can be clearly understood by those skilled in the art that the above embodiments can be implemented by means of software plus a necessary general hardware platform, and can also be implemented by hardware, but in many cases, the former is a better implementation. Based on such understanding, the technical solution of the present disclosure, which is essential or contributes to the related art, may be embodied in the form of a software product. The computer software product is stored on a storage medium (such as a ROM/RAM, a magnetic disk, an optical disk) as described above, which includes a number of instructions to cause a terminal device (which may be a cell phone, computer, server, air conditioner, or network device, etc.) to perform the methods as described in various embodiments of the present disclosure.

The above are only preferred embodiments of the present disclosure, and thus do not limit the scope of the present disclosure. The equivalent structure or equivalent process transformations made by the present specification and the drawings are directly or indirectly applied to other related technical fields, and are included in the scope of the present disclosure.

## Claims

1. A method for controlling a fan heater, **characterized in that**, the method comprises:
sampling (S100) an indoor temperature at a preset interval;
comparing (S200) the sampled indoor temperature with a preset temperature to obtain a temperature control signal, wherein the operation of comparing (S200) the sampled indoor temperature with a preset temperature to obtain a temperature control signal comprises: obtaining a difference value by subtracting the sampled indoor temperature from the preset temperature value; and converting the difference value into the temperature control signal; and
adjusting (S300) a power of a heater and a rotate speed of a fan according to the temperature control signal,
**characterized in that** the operation of "adjusting (S300) a power of a heater and a rotate speed of a fan according to the temperature control signal" comprises:
controlling the fan to rotate at a low speed and controlling the heater to heat at a high power, in response to a determination that the difference value is between a first preset difference value and a second preset difference value.

2. The method of claim 1, wherein the operation of "adjusting (S300) a power of a heater and a rotate speed of a fan according to the temperature control signal" comprises:
controlling the fan to rotate at a high speed and controlling the heater to heat at a high power, in response to a determination that the difference value is greater than a first preset difference value.

3. The method of any one of claim 1 or 2, wherein the first preset difference is 5 degrees Celsius, the high speed is in a range of 1800 rpm to 2300 rpm, and the high power is in a range of 1800 watts to 2200 watts.

4. The method of claim 1, wherein the first preset difference is 5 degrees Celsius, the second preset difference is 3 degrees Celsius, the low speed is in a range of 900 rpm to 1600 rpm, and the high power is in a range of 1800 watts to 2200 watts.

5. The method of any one of claims 1-4, wherein the operation of "adjusting (S300) a power of a heater and a rotate speed of a fan according to the temperature control signal" comprises:
controlling the fan to rotate at a low speed and controlling the heater to heat at a low power, in response to a determination that the difference value is less than a second preset difference value and greater than zero.

6. The method of claim 5, wherein the second preset difference is 3 degrees Celsius, the low speed is in a range of 900 rpm to 1600 rpm, and the low power is in a range of 900 watts to 1600 watts.

7. The method of any one of claims 1 to 6, wherein the operation of "adjusting (S300) a power of a heater and a rotate speed of a fan according to the temperature control signal" comprises:
controlling the fan to stop operating after the sampled indoor temperature reaches the preset temperature, and controlling the heater to stop operating after a delay of a preset time duration.

8. A device for controlling a fan heater, wherein the device comprises a memory, a processor, and a program for controlling the fan heater stored on the memory and executable on the processor, **characterized in that** the program, when executed by the processor causes the fan heater, when the device is installed in the fan heater comprising a heater, a fan and means for sampling an indoor temperature, to implement the operations of the method as recited in any one of claims 1 to 7.

9. A fan heater, comprising a housing (30), a heater (50), a fan (40), means for sampling an indoor temperature and a device for controlling the fan heater (60) all disposed in the housing (30),
wherein the device comprises a memory, a processor, and a program for controlling the fan heater stored on the memory and executable on the processor, the program, when executed by the processor, causes the fan heater to implement the operations of the method as recited in any one of claims 1 to 7.

10. A storage medium, **characterized in that**, the storage medium stores a program for controlling a fan heater, the program, when executed by a processor installed in a device for controlling a fan heater, the fan heater comprising a heater, a fan and means for sampling an indoor temperature, causes the fan heater to implement the operations of the method as recited in any one of claims 1 to 7.

## Patentansprüche

1. Verfahren zum Steuern eines Heizlüfters, **dadurch gekennzeichnet, dass** das Verfahren Folgendes umfasst:
Abfragen (S100) einer Innentemperatur in einem voreingestellten Intervall; Vergleichen (S200) der abgefragten Innentemperatur mit einer voreingestellten Temperatur, um ein Temperatursteuersignal zu erhalten, wobei der Vorgang des Vergleichens (S200) der abgefragten Innentemperatur mit einer voreingestellten Temperatur, um ein Temperatursteuersignal zu erhalten Folgendes umfasst: Erhalten eines Differenzwertes durch Subtrahieren der abgefragten Innentemperatur von dem voreingestellten Temperaturwert; und Umwandeln des Differenzwertes in das Temperatursteuersignal; und
Einstellen (S300) einer Leistung eines Heizgeräts und einer Drehgeschwindigkeit eines Lüfters entsprechend dem Temperatursteuersignal,
**dadurch gekennzeichnet, dass** der Vorgang des "Einstellens (S300) einer Leistung einer Heizvorrichtung und einer Drehgeschwindigkeit eines Lüfters gemäß dem Temperatursteuersignal" Folgendes umfasst:
Steuern des Lüfters, so dass er sich mit einer niedrigen Geschwindigkeit dreht, und Steuern des Heizgeräts, so dass es mit einer hohen Leistung heizt, in Reaktion auf eine Bestimmung, dass der Differenzwert zwischen einem ersten voreingestellten Differenzwert und einem zweiten voreingestellten Differenzwert liegt.

2. Verfahren gemäß Anspruch 1, wobei der Vorgang des "Einstellens (S300) einer Leistung eines Heizgeräts und einer Drehgeschwindigkeit eines Lüfters entsprechend dem Temperatursteuersignal" Folgendes umfasst:
Steuern des Lüfters, so dass er sich mit einer hohen Geschwindigkeit dreht, und Steuern des Heizgeräts, so dass es mit einer hohen Leistung heizt, in Reaktion auf eine Bestimmung, dass der Differenzwert größer als ein erster voreingestellter Differenzwert ist.

3. Verfahren gemäß einem der Ansprüche 1 oder 2, wobei die erste voreingestellte Differenz 5 Grad Celsius beträgt, die hohe Geschwindigkeit in einem Bereich von 1800 U/min bis 2300 U/min liegt, und die hohe Leistung in einem Bereich von 1800 Watt bis 2200 Watt liegt.

4. Verfahren gemäß Anspruch 1, wobei die erste voreingestellte Differenz 5 Grad Celsius beträgt, die zweite voreingestellte Differenz 3 Grad Celsius beträgt, die niedrige Geschwindigkeit in einem Bereich von 900 U/min bis 1600 U/min liegt und die hohe Leistung in einem Bereich von 1800 Watt bis 2200 Watt liegt.

5. Verfahren gemäß einem der Ansprüche 1-4, wobei der Vorgang des "Einstellens (S300) einer Leistung eines Heizgeräts und einer Drehgeschwindigkeit eines Lüfters entsprechend dem Temperatursteuersignal" Folgendes umfasst:
Steuern des Lüfters, so dass er sich mit einer niedrigen Geschwindigkeit dreht, und Steuern des Heizgeräts, so dass es mit einer niedrigen Leistung heizt, in Reaktion auf eine Bestimmung, dass der Differenzwert kleiner als ein zweiter voreingestellter Differenzwert und größer als Null ist.

6. Verfahren gemäß Anspruch 5,
wobei die zweite voreingestellte Differenz 3 Grad Celsius beträgt, die niedrige Geschwindigkeit in einem Bereich von 900 U/min bis 1600 U/min liegt und die niedrige Leistung in einem Bereich von 900 Watt bis 1600 Watt liegt.

7. Verfahren gemäß einem der Ansprüche 1 bis 6, wobei der Vorgang des "Einstellens (S300) einer Leistung eines Heizgeräts und einer Drehgeschwindigkeit eines Lüfters gemäß dem Temperatursteuersignal" Folgendes umfasst
Steuern des Lüfters, so dass er den Betrieb stoppt, nachdem die abgefragte Innentemperatur die voreingestellte Temperatur erreicht, und Steuern des Heizgeräts, so dass es den Betrieb nach einer Verzögerung von einer voreingestellten Zeitdauer stoppt.

8. Vorrichtung zum Steuern eines Heizlüfters, wobei die Vorrichtung einen Speicher, einen Prozessor und ein Programm zum Steuern des Heizlüfters umfasst, das in dem Speicher gespeichert und auf dem Prozessor ausführbar ist, **dadurch gekennzeichnet, dass** das Programm, wenn es von dem Prozessor ausgeführt wird, den Heizlüfter veranlasst, wenn die Vorrichtung in dem Heizlüfter umfassend ein Heizgerät, einen Lüfter und Mittel zum Abfragen einer Innentemperatur installiert ist, die Operationen des Verfahrens gemäß einem der Ansprüche 1 bis 7 zu implementieren.

9. Heizlüfter, umfassend ein Gehäuse (30), ein Heizgerät (50), einen Lüfter (40), Mittel zum Abfragen einer Innentemperatur und eine Vorrichtung zur Steuerung des Heizlüfters (60), die alle in dem Gehäuse (30) angeordnet sind,
wobei die Vorrichtung einen Speicher, einen Prozessor und ein Programm zum Steuern des Heizlüfters umfasst, das in dem Speicher gespeichert und auf dem Prozessor ausführbar ist, wobei das Programm, wenn es von dem Prozessor ausgeführt wird, den Heizlüfter veranlasst, die Operationen des Verfahrens gemäß einem der Ansprüche 1 bis 7 zu implementieren.

10. Speichermedium, **dadurch gekennzeichnet, dass** das Speichermedium ein Programm zur Steuerung eines Heizlüfters speichert, wobei das Programm, wenn es von einem Prozessor ausgeführt wird, der in dem Heizlüfter umfassend ein Heizgerät, einen Lüfter und Mittel zum Abfragen einer Innentemperatur installiert ist, den Heizlüfter veranlasst, die Operationen des Verfahrens gemäß einem der Ansprüche 1 bis 7 zu implementieren.

## Revendications

1. Procédé de commande d'un chauffage soufflant, **caractérisé en ce que** le procédé comprend :
l'échantillonnage (S100) d'une température intérieure selon un intervalle prédéfini ;
la comparaison (S200) de la température intérieure échantillonnée avec une température prédéfinie pour obtenir un signal de commande de température, dans lequel l'étape de comparaison (S200) de la température intérieure échantillonnée avec une température prédéfinie pour obtenir un signal de commande de température comprend : l'obtention d'une valeur de différence par soustraction de la température intérieure échantillonnée à la valeur de température prédéfinie ; et la conversion de la valeur de différence en le signal de commande de température ; et
le réglage (S300) d'une puissance d'un chauffage et d'une vitesse de rotation d'un ventilateur en fonction du signal de commande de température,
**caractérisé en ce que** l'étape de « réglage (S300) d'une puissance d'un chauffage et d'une vitesse de rotation d'un ventilateur en fonction du signal de commande de température » comprend :
la commande du ventilateur de manière à le faire tourner à une vitesse basse et la commande du chauffage de manière à chauffer à une puissance élevée, en réponse à une détermination que la valeur de différence est comprise entre une première valeur de différence prédéfinie et une deuxième valeur de différence prédéfinie.

2. Procédé selon la revendication 1, dans lequel l'étape de « réglage (S300) d'une puissance d'un chauffage et d'une vitesse de rotation d'un ventilateur en fonction du signal de commande de température » comprend :
la commande du ventilateur de manière à le faire tourner à une vitesse élevée et la commande du chauffage de manière à chauffer à une puissance élevée, en réponse à une détermination que la valeur de différence est supérieure à une première valeur de différence prédéfinie.

3. Procédé selon l'une quelconque des revendications 1 et 2, dans lequel la première différence prédéfinie est de 5 degrés Celsius, la vitesse élevée est comprise dans une plage de 1800 rpm à 2300 rpm, et la puissance élevée est comprise dans la plage de 1800 watts à 2200 watts.

4. Procédé selon la revendication 1, dans lequel la première différence prédéfinie est de 5 degrés Celsius, la deuxième différence prédéfinie est de 3 degrés Celsius, la vitesse basse est comprise dans une plage de 900 rpm à 1600 rpm, et la puissance élevée est comprise dans une plage de 1800 watts à 2200 watts.

5. Procédé selon l'une quelconque des revendications 1 à 4, dans lequel l'étape de
« réglage (S300) d'une puissance d'un chauffage et d'une vitesse de rotation d'un ventilateur en fonction du signal de commande de température » comprend :
la commande du ventilateur de manière à le faire tourner à une vitesse basse et la commande du chauffage de manière à chauffer à une puissance faible, en réponse à une détermination que la valeur de différence est inférieure à une deuxième valeur de différence prédéfinie et supérieure à zéro.

6. Procédé selon la revendication 5, dans lequel la deuxième différence prédéfinie est de 3 degrés Celsius, la vitesse basse est comprise dans une plage de 900 rpm à 1600 rpm, et la puissance faible est comprise dans la plage de 900 watts à 1600 watts.

7. Procédé selon l'une quelconque des revendications 1 à 6, dans lequel l'étape de
« réglage (S300) d'une puissance d'un chauffage et d'une vitesse de rotation d'un ventilateur en fonction du signal de commande de température » comprend :
la commande du ventilateur de manière à arrêter son fonctionnement une fois que la température intérieure échantillonnée atteint la température prédéfinie, et la commande du chauffage de manière à arrêter son fonctionnement lors d'un retard sur une durée prédéfinie.

8. Dispositif de commande d'un chauffage soufflant, le dispositif comprenant une mémoire, un processeur, ainsi qu'un programme destiné à commander le chauffage soufflant, stocké dans la mémoire et exécutable sur le processeur, **caractérisé en ce que** le programme, lorsqu'il est exécuté par le processeur, incite le chauffage soufflant à mettre en œuvre les étapes du procédé selon l'une quelconque des revendications 1 à 7, lorsque le dispositif est installé dans le chauffage soufflant comprenant un chauffage, un ventilateur et un moyen d'échantillonnage d'une température intérieure.

9. Chauffage soufflant comprenant un boîtier (30), un chauffage (50), un ventilateur (40), un moyen d'échantillonnage d'une température intérieure et un dispositif de commande du chauffage soufflant (60), tous disposés dans le boîtier (30),
dans lequel le dispositif comprend une mémoire, un processeur, ainsi qu'un programme destiné à commander le chauffage soufflant, stocké dans la mémoire et exécutable sur le processeur, où le programme, lorsqu'il est exécuté par le processeur, incite le chauffage soufflant à mettre en œuvre les étapes du procédé selon l'une quelconque des revendications 1 à 7.

10. Support de stockage **caractérisé en ce que** le support de stockage stocke un programme destiné à commander un chauffage soufflant, où le programme incite le chauffage soufflant à mettre en œuvre les étapes du procédé selon l'une quelconque des revendications 1 à 7, lorsque celui-ci est exécuté par un processeur installé dans un dispositif destiné à commander un chauffage soufflant, le chauffage soufflant comprenant un chauffage, un ventilateur et un moyen d'échantillonnage d'une température intérieure.
